# EUROPEAN PATENT APPLICATION

(11) **EP 1 607 318 A2**
(43) Date of publication of application: **21.12.2005**
(21) Application number: 05105065.6
(22) Date of filing: 09.06.2005
(51) Int. Cl.: B62K 19/46, B62J 9/00

(54) **Structure of motorcycle**

(30) Priority: 17.06.2004 JP 2004179850
(71) Applicant: HONDA MOTOR CO., Ltd., Tokyo (JP)
(72) Inventor: Tsunoda, Kazuhiko, Wako-shi Saitama (JP)
(74) Representative: Poulin, Gérard

(57) **Abstract**

In a step-through structure of a motorcycle, good knee-gripping is enabled without interrupting a rider from getting on and off:

A storage compartment (30) is supported by a vehicle body frame (10) in front of a seat (26) with a space for step-through secured with respect to the front end of the seat. The storage compartment (30) includes knee-grip portions (33) which extend so as to reduce the distance therebetween toward the rear of the vehicle at positions corresponding to the inner sides of knees or inner thighs of a rider (20) seated on the seat (26). Provided between the storage box (30) and a step floor (23) is a predetermined foot space secured so as to be capable of storing the feet of the rider (20).

## Description

### TECHNICAL FIELD

The present invention relates to a step-through structure of a motorcycle and, more specifically to a step-through structure of a motorcycle which enables knee-gripping.

### BACKGROUND ART

In a motorcycle, as disclosed in Document JP-A-2003-54466, a portion which corresponds to kneepad is provided at the rear of a fuel tank so as to enable a rider to keep his knees gripping a vehicle body in front of a seat, so called "knee-gripping". Therefore, he/she must straddle the vehicle body when riding or getting off.

Japanese Utility Model n°3,039,548 discloses for a two-wheel vehicle having a step-through structure having a step portion opening through the lateral direction as a scooter, a technology in which the knee-gripping is enabled by providing a movable knee-grip pad which can be stored within the seat.

In JP-A-59-114180, a technology in which a front portion of the seat of a scooter-type vehicle is protruded for using as a knee-grip pad is disclosed. This document also discloses a technology in which the knee-grip portion is installed storably or detachably in front of the seat at a position apart from the front end of the seat.

### DISCLOSURE OF THE INVENTION

Since the knee-grip pad described in the last two documents is provided in front of the seat, a grip feeling as in the case of knee-gripping the rear portion of a fuel tank disposed continuously from the seat toward the front in the related art cannot be obtained.

With the structure in which the knee grip is provided in front of the seat apart therefrom as in these documents, when the knee grip is adapted to be storable or detachably movable so that the knee grip does not become an obstacle when the rider gets on and off the vehicle, a good grip feeling cannot be obtained since rigidity is insufficient.

Furthermore, in the knee grip disclosed, since it is installed with the premise that it is stored or detached, it has a constraint in size. Therefore, the grip feeling as in the related art cannot be obtained, and in addition, it cannot be provided with a function to store articles.

An object of the present invention is to solve the above-described problem of the related art, and to provide a step-through structure of a motorcycle provided with a knee-grip portion which can provide a knee-grip feeling as in the related art without becoming an obstacle when the rider gets on and off the vehicle and has a function to store articles.

In order to achieve the above-described object, the present invention is a step-through structure of a motorcycle in which a space is secured in front of a seat above a step floor, wherein a storage box is provided in the space in front of the seat at a position apart from the front end of the seat and knee-grip portions are provided on side surfaces of the storage box.

Advantageously, the space is secured between the lower end of the storage box and the step floor and/or the storage box includes supporting means for supporting a lid member so as to be capable of opening and closing whereby the lid member is stored in the space secured between the storage box and the front end of the seat when opened.

According to the present invention as defined in the appended claims, some advantages are achieved.
Since the storage box is provided in the space in front of the seat, and the knee grips are provided on the both side surfaces of the storage box, the same grip feeling as in the related art can be obtained, and in addition, the amount of storage for the article can be increased.

Since the space is secured between the lower end of the storage box and the step floor, a sufficient space for placing legs can be secured on the step floor.

Since the lid member of the storage box can be opened by a wide angle, the stored article can be put in and taken out easily.

### BRIEF DESCRIPTION OF THE DRAWINGS

Referring now to the drawings, preferred embodiments of the present invention will be described in detail.

Fig. 1 is a side view of a scooter-type motorcycle to which the present invention is applied according to a first embodiment.

Fig. 2 is a drawing of a principal portion of Fig. 1 viewed from above.

Fig. 3 is a side view of the scooter-type motorcycle to which the present invention is applied according to a second embodiment.

### DETAILED DESCRIPTION OF PREFERRED EMBODIMENTS

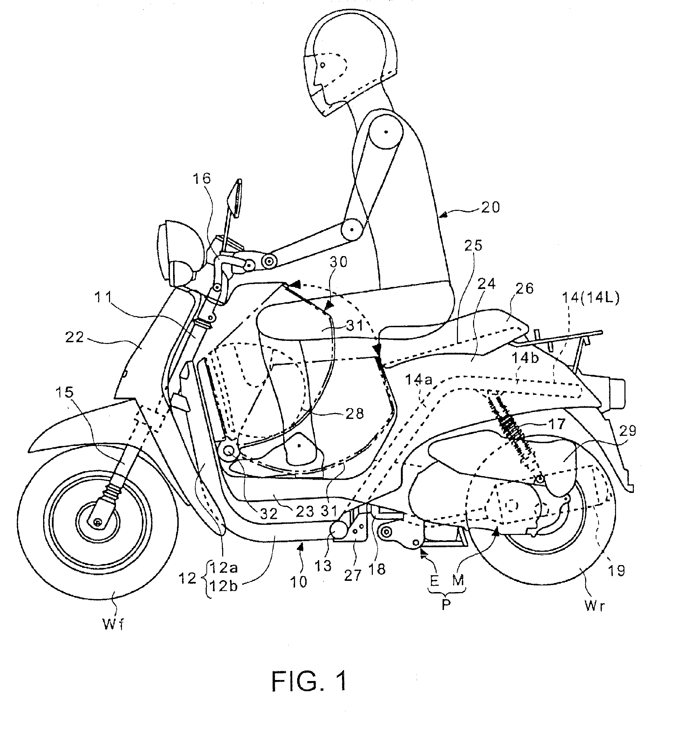

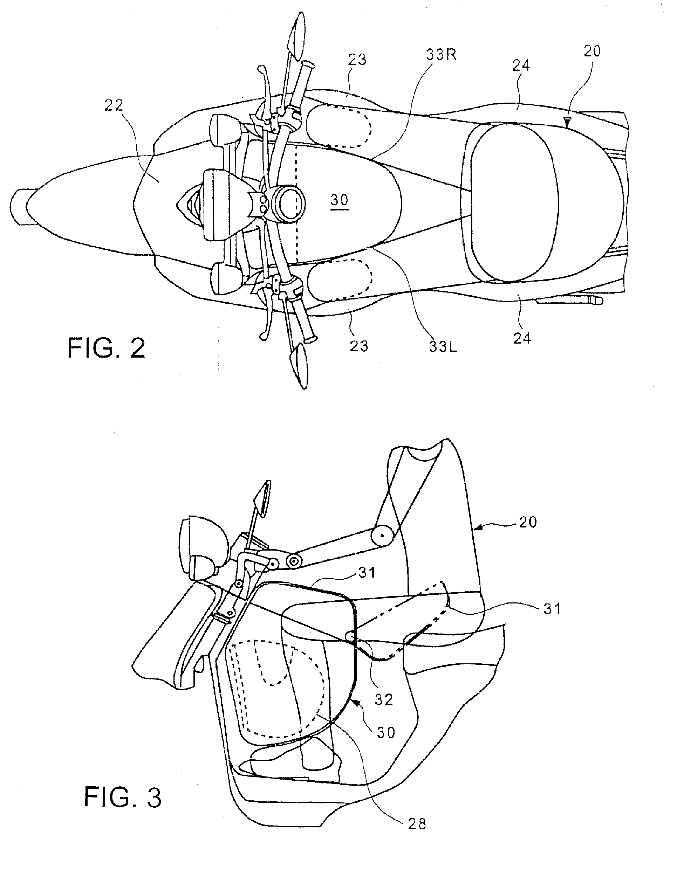

As shown in figures 1 and 2, a vehicle body frame 10 mainly includes a main frame pipe 12 provided with a head pipe 11 secured at the front end thereof, a cross pipe 13 secured to the rear end of the main frame pipe 12 at a right angle and horizontally, and a pair of left and right rear frame pipes 14 (14L, 14R) continuing to the both ends of the cross pipe 13 at the front ends thereof.

The main frame pipe 12 includes a down frame section 12a inclined downward toward the rear from the head pipe 11 and a lower frame section 12b extending rearward from the rear end of the down frame section 12a substantially horizontally integrally connected with each other. The cross pipe 13 extends laterally of the vehicle body frame 10, and the rear end of the main frame pipe 12 is secured to the center of the cross pipe 13 at a right angle. The pair of the left and right rear frames 14 include rise frame sections 14a extending upward from both ends of the cross pipe 13 toward the rear, and upper frame sections 14b extending horizontally from the rear ends of the rise frame sections 14a toward the rear and curved in a horizontal plane so that rear end openings face each other integrally connected to each other.

A front fork 15 as a steering member for supporting a front wheel Wf is steerably supported by the head pipe 11, and a steering handle 16 is connected to the upper end of the front fork 15. A power unit P including an engine E disposed in front of the rear wheel Wr and a stepless transmission M disposed on the left side of the rear wheel Wr is supported at the front portion of the rear frame pipe 14 so as to be capable of pivoting in the vertical direction, and the rear wheel Wr is journaled at the rear portion of the power unit P. An air cleaner 29 is disposed on the upper left side of the rear wheel Wr.

Provided between the rear portion of the power unit P and the rear frame pipe 14L is a rear cushion unit 17. An exhaust pipe 18 for introducing exhaust gas from the engine E extends from the engine E to the right side of the rear wheel Wr, and the exhaust pipe 18 is connected to an exhaust muffler 19 disposed on the right side of the rear wheel Wr. A storage box 25 is supported between the front portions of the left and right rear frame pipes 14 so as to be disposed above the engine E.

The vehicle body frame 10 is covered by a leg shield 22 for covering the front side of feet of a rider 20, a step floor 23 continuing to the lower portion of the leg shield 22 for placing the feet of the rider 20, and side covers 24 continuing from the step floor 23 for covering the rear portion of the vehicle body from both sides.

The storage box 25 and the fuel tank (not shown) are covered by the side covers 24, and a seat 26 for covering the storage box 25 from above is mounted to the upper portions of the side covers 24 so as to be capable of opening and closing. In other words, the step floor 23 is formed on a vehicle body cover 21 so as to be disposed between the steering handle 16 and the seat 26, and a frame-side bracket 27 is disposed downwardly of the rear end of the step floor 23 for pivotably supporting the power unit P to the vehicle body frame 10.

In front of the seat 26, a storage compartment 30 which can accommodate a helmet 28 therein is fixedly supported by the vehicle body frame 10 at a position apart from the front end of the seat so as to secure the space for step-through. The storage compartment 30 includes knee-grip portions 33L, 33R which extend so as to reduce the distance therebetween toward the rear of the vehicle on both side surfaces corresponding to the inner sides of the knees or the inner thighs of the rider 20 seated on the seat 26, as shown in Fig. 2. Between the storage compartment 30 and the step floor 23, a predetermined foot space is secured so that the feet of the rider 20 can be stored.

In this manner, according to this embodiment, since the knee-grip portions which also serve as a large-sized storage compartment are arranged in the space secured in front of the seat of the scooter-type motorcycle, the knee-grip during travel can be secured without interrupting the rider 20 from getting on and off and, in addition, a second storage space of a large capacity is secured. In addition, in this embodiment, since the storage compartment 30 is fixedly supported by the vehicle body frame 10 with high rigidity, the same knee-grip feeling as in the related art is obtained.

The lid member 31 of the storage compartment 30 is supported by a supporting member 32 so as to be capable of opening and closing so as to be stored in the foot space secured between the storage compartment 30 and the front end of the seat when the lid is opened. In this opening-closing structure, since the opening can be secured widely when the lid is opened, a large article such as a helmet can be put in and taken out easily.

In the embodiment shown in Fig. 3, the shape of the lid member 31 of the storage box 30 and its opening-closing direction are different from the first embodiment.

In this embodiment, the lid member 31 is provided so as to cover the upper portion of the storage box 30, and is supported by the supporting member 32 so as to be opened toward the upper rear about the rear end. According to this embodiment, since the upper portion of the storage box 30 opens, the stored article can be put in and taken out from above.

## Claims

1. Step-through structure of a motorcycle in which a space is secured above a step floor (23) in front of a seat (26), **characterized in that** a storage compartment (30) is fixedly provided in the space in front of the seat (26) at a position apart from the front end of the seat (26) and knee-grip portions (33) are provided on side surfaces of the storage compartment (30).

2. Structure of a motorcycle according to Claim 1, wherein the space is secured between the lower end of the storage compartment (30) and the step floor (23).

3. Structure of a motorcycle according to Claim 1 or 2, wherein the storage compartment (30) includes a lid (31), and the lid (31) is supported so as to be capable of opening and closing whereby the lid (31) can be stored in the space secured between the storage compartment (30) and the front end of the seat (26) when the lid (31) is opened.
